# EUROPEAN PATENT APPLICATION

(11) **EP 4 811 878 A1**
(43) Date of publication of application: **23.09.2026**
(21) Application number: 24910977.8
(22) Date of filing: 20.12.2024
(51) Int. Cl.: H04W 52/02

(54) **ENERGY-SAVING METHOD AND APPARATUS**

(30) Priority: 28.12.2023 CN 202311855679
(71) Applicant: Huawei Technologies Co., Ltd., Shenzhen, Guangdong 518129 (CN)
(72) Inventor: ZHANG, Gejian, Shenzhen, Guangdong 518129 (CN)
(74) Representative: Huawei European IPR
(86) International application number: PCT/CN2024/141111
(87) International publication number: WO 2025/140048

(57) **Abstract**

This application relates to the field of wireless communication technologies and provides an energy saving method and an apparatus, to improve the energy saving effect of a network device. In the method, a baseband unit receives first information, where the first information indicates one or more carrier groups and/or one or more frequency band groups, one carrier group includes one or more carriers, and one frequency band group includes one or more frequency bands; and the baseband unit sends configuration information, where the configuration information is determined based on the first information, and the configuration information indicates to shut down a frequency band included in at least one of the one or more frequency band groups, or the configuration information indicates to shut down a carrier included in at least one of the one or more carrier groups. Based on the foregoing solution, the baseband unit may determine which frequency bands and/or carriers are to be shut down, thereby achieving energy saving. Compared with related technologies where carriers are shut down only based on service load, this solution can further improve the energy saving effect.

## Description

### CROSS-REFERENCE TO RELATED APPLICATIONS

This application claims priority to Chinese Patent Application No. 202311855679.8, filed with the China National Intellectual Property Administration on December 28, 2023, and entitled "ENERGY SAVING METHOD AND APPARATUS", which is incorporated herein by reference in its entirety.

### TECHNICAL FIELD

This application relates to the field of wireless communication technologies, and in particular, to an energy saving method and an apparatus.

### BACKGROUND

Radio frequency units are necessary for a base station. When terminals access the base station, the radio frequency units keep operating to provide network services. However, if no terminals are accessing the base station, keeping the radio frequency units operational results in unnecessary energy consumption. In scenarios when no service is expected during fixed periods, the base station may put the radio frequency units into a sleep state to reduce such unnecessary energy consumption. For example, at midnight, because there are few or no access terminals, the base station may put the radio frequency units to a sleep state. In this case, the radio frequency units cannot provide network services, nor can they send or receive radio frequency signals.

However, in the foregoing dormancy manner of the radio frequency units, the base station may put some or all radio frequency units into the sleep state, and therefore, some or all carriers corresponding to the radio frequency units may be shut down. However, the base station cannot sense the service load state of the carriers and lacks the capability to adjust carrier shutdown based on the service load.

During some periods, for example, in the early morning, cells managed by the base station may be idle or lightly loaded, yet the radio frequency units remain in the operating state. In such cases, few or no terminals use the radio frequency signals. Therefore, energy consumption caused by the radio frequency signals is unnecessary. Because radio frequency signals are sent through carriers, shutting down the carriers sending the radio frequency signals in the frequency domain ensures that the radio frequency units have no carriers in the operating state, thereby reducing unnecessary energy consumption.

However, the foregoing carrier shutdown technology can only be used to control and adjust the service load, but cannot achieve an optimal shutdown mode for the radio frequency units. In the foregoing carrier shutdown technology, even if some carriers are shut down, the radio frequency units corresponding to the carriers still have carriers in the operating state. As a result, the base station cannot put the radio frequency unit into a sleep state, and energy consumption cannot be reduced.

### SUMMARY

This application provides an energy saving method and an apparatus to improve the energy saving effect of a network device.

According to a first aspect, an energy saving method is provided. The method may be performed by a baseband unit, or may be performed by a chip/chip system. In the method, the baseband unit receives first information, where the first information indicates one or more carrier groups and/or one or more frequency band groups, one carrier group includes one or more carriers, and one frequency band group includes one or more frequency bands; and the baseband unit sends configuration information, where the configuration information is determined based on the first information, and the configuration information indicates to shut down a frequency band included in at least one of the one or more frequency band groups, or the configuration information indicates to shut down a carrier included in at least one of the one or more carrier groups.

Based on the foregoing solution, the baseband unit may determine frequency band groups and/or carrier groups of a radio frequency unit, so that which frequency band and/or carrier are/is to be shut down can be determined, thereby achieving energy saving. Compared with related technologies where carriers are shut down only based on service load, this solution can further improve the energy saving effect.

In a possible implementation, the first information includes an identifier of the carrier included in the one or more carrier groups, and/or the first information includes an identifier of the frequency band included in the one or more frequency band groups. Based on this solution, a carrier included in one or more carrier groups and/or a frequency band included in one or more frequency band groups can be indicated to the baseband unit by using the identifier of the carrier and/or the identifier of the frequency band.

In a possible implementation, the configuration information indicates to delete one or more carriers on the frequency band included in the at least one frequency band group. Alternatively, the configuration information indicates to deactivate one or more carriers on the frequency band included in the at least one frequency band group. Alternatively, the configuration information indicates to block one or more carriers on the frequency band included in the at least one frequency band group. Alternatively, the configuration information indicates to disable one or more carriers on the frequency band included in the at least one frequency band group. Alternatively, the configuration information indicates to enter a radio frequency sleep state.

Based on this solution, the baseband unit may determine, based on the frequency band groups and/or the carrier groups, which frequency band and/or carrier are/is to be shut down, to achieve the objective of energy saving, so that a means of shutting down the frequency bands and/or the carriers is indicated to the radio frequency unit.

In a possible implementation, the first information further includes a priority corresponding to the one or more frequency band groups, and/or the first information further includes a priority corresponding to the one or more carrier groups, where each priority represents an energy saving priority and is used to determine the configuration information.

Based on this solution, the radio frequency unit may cause, by using the priority, the baseband unit to determine the priority corresponding to the frequency band groups and/or the carrier groups, to determine which frequency band and/or carrier are/is to be shut down for a relatively good energy saving effect.

In a possible implementation, a higher priority represents a higher energy saving priority. The configuration information indicates to shut down a frequency band included in K1 frequency band groups with higher priorities among the one or more frequency band groups, or the configuration information indicates to shut down a carrier included in K2 carrier groups with higher priorities among the one or more carrier groups, where K1 and K2 are integers greater than or equal to 1.

Based on this solution, the baseband unit may choose to shut down a frequency band group with a high priority or the carrier group with a high priority, to achieve the best energy saving effect.

In a possible implementation, the baseband unit sends second information, where the second information is used to request the first information. Based on this solution, the baseband unit may query or request the first information from the radio frequency unit by using the second information.

According to a second aspect, an energy saving method is provided. The method may be performed by a radio frequency unit, or may be performed by a chip/chip system. In the method, the radio frequency unit sends first information, where the first information indicates one or more carrier groups and/or one or more frequency band groups, one carrier group includes one or more carriers, and one frequency band group includes one or more frequency bands; and the radio frequency unit receives configuration information, where the configuration information is determined based on the first information, and the configuration information indicates to shut down a frequency band included in at least one of the one or more frequency band groups, or the configuration information indicates to shut down a carrier included in at least one of the one or more carrier groups, where based on the configuration information, the radio frequency unit shuts down the frequency band included in the at least one of the one or more frequency band groups, or shuts down the carrier included in the at least one of the one or more carrier groups.

In a possible implementation, the first information includes an identifier of the carrier included in the one or more carrier groups, and/or the first information includes an identifier of the frequency band included in the one or more frequency band groups.

In a possible implementation, the radio frequency unit deletes one or more carriers on the frequency band included in the at least one frequency band group. Alternatively, the radio frequency unit deactivates one or more carriers on the frequency band included in the at least one frequency band group. Alternatively, the radio frequency unit blocks one or more carriers on the frequency band included in the at least one frequency band group. Alternatively, the radio frequency unit disables the frequency band included in the at least one frequency band group. Alternatively, the radio frequency unit enters a radio frequency sleep state.

In a possible implementation, the first information further includes a priority corresponding to the one or more frequency band groups, and/or the first information further includes a priority corresponding to the one or more carrier groups, where each priority represents an energy saving priority and is used to determine the configuration information.

In a possible implementation, a higher priority represents a higher energy saving priority. The configuration information indicates to shut down a frequency band included in K1 frequency band groups with higher priorities among the one or more frequency band groups, or the configuration information indicates to shut down a carrier included in K2 carrier groups with higher priorities among the one or more carrier groups, where K1 and K2 are integers greater than or equal to 1.

In a possible implementation, the radio frequency unit receives second information, where the second information is used to request the first information.

According to a third aspect, a communication apparatus is provided, including a processing unit and a transceiver unit. The transceiver unit is configured to receive first information, where the first information indicates one or more carrier groups and/or one or more frequency band groups, one carrier group includes one or more carriers, and one frequency band group includes one or more frequency bands; and the processing unit is configured to determine configuration information, where the configuration information is determined based on the first information, and the configuration information indicates to shut down a frequency band included in at least one of the one or more frequency band groups, or the configuration information indicates to shut down a carrier included in at least one of the one or more carrier groups, where the transceiver unit is further configured to send the configuration information.

In a possible implementation, the first information includes an identifier of the carrier included in the one or more carrier groups, and/or the first information includes an identifier of the frequency band included in the one or more frequency band groups.

In a possible implementation, the configuration information indicates to delete one or more carriers on the frequency band included in the at least one frequency band group. Alternatively, the configuration information indicates to deactivate one or more carriers on the frequency band included in the at least one frequency band group. Alternatively, the configuration information indicates to block one or more carriers on the frequency band included in the at least one frequency band group. Alternatively, the configuration information indicates to disable the frequency band included in the at least one frequency band group. Alternatively, the configuration information indicates to enter a radio frequency sleep state.

In a possible implementation, the first information further includes a priority corresponding to the one or more frequency band groups, and/or the first information further includes a priority corresponding to the one or more carrier groups, where each priority represents an energy saving priority and is used to determine the configuration information.

In a possible implementation, a higher priority represents a higher energy saving priority. The configuration information indicates to shut down a frequency band included in K1 frequency band groups with higher priorities among the one or more frequency band groups, or the configuration information indicates to shut down a carrier included in K2 carrier groups with higher priorities among the one or more carrier groups, where K1 and K2 are integers greater than or equal to 1.

In a possible implementation, the transceiver unit is further configured to send second information, where the second information is used to request the first information.

According to a fourth aspect, a communication apparatus is provided, including a processing unit and a transceiver unit. The transceiver unit is configured to send first information, where the first information indicates one or more carrier groups and/or one or more frequency band groups, one carrier group includes one or more carriers, and one frequency band group includes one or more frequency bands, where the transceiver unit is further configured to receive configuration information, where the configuration information is determined based on the first information, and the configuration information indicates to shut down a frequency band included in at least one of the one or more frequency band groups, or the configuration information indicates to shut down a carrier included in at least one of the one or more carrier groups; and based on the configuration information, the processing unit is configured to shut down the frequency band included in the at least one of the one or more frequency band groups, or shut down the carrier included in the at least one of the one or more carrier groups.

In a possible implementation, the first information includes an identifier of the carrier included in the one or more carrier groups, and/or the first information includes an identifier of the frequency band included in the one or more frequency band groups.

In a possible implementation, the processing unit is specifically configured to: delete one or more carriers on the frequency band included in the at least one frequency band group; deactivate one or more carriers on the frequency band included in the at least one frequency band group; block one or more carriers on the frequency band included in the at least one frequency band group; disable the frequency band included in the at least one frequency band group; or enter a radio frequency sleep state.

In a possible implementation, the first information further includes a priority corresponding to the one or more frequency band groups, and/or the first information further includes a priority corresponding to the one or more carrier groups, where each priority represents an energy saving priority and is used to determine the configuration information.

In a possible implementation, a higher priority represents a higher energy saving priority. The configuration information indicates to shut down a frequency band included in K1 frequency band groups with higher priorities among the one or more frequency band groups, or the configuration information indicates to shut down a carrier included in K2 carrier groups with higher priorities among the one or more carrier groups, where K1 and K2 are integers greater than or equal to 1.

In a possible implementation, the transceiver unit is further configured to receive second information, where the second information is used to request the first information.

According to a fifth aspect, this application provides a communication apparatus, including a processor. The processor is coupled to a memory. The memory is configured to store a computer program or instructions. The processor is configured to execute the computer program or the instructions, to perform the implementation methods in the first aspect and the second aspect. The memory may be located inside the apparatus, or may be located outside the apparatus. There are one or more processors.

According to a sixth aspect, this application provides a communication apparatus, including a processor and an interface circuit. The interface circuit is configured to communicate with another apparatus, and the processor is configured to perform the implementation methods in the first aspect and the second aspect.

According to a seventh aspect, a communication apparatus is provided. The apparatus includes a logic circuit and an input/output interface.

According to an eighth aspect, this application provides a communication system, including a baseband unit and a radio frequency unit configured to perform the implementation methods in the first aspect and the second aspect.

According to a ninth aspect, this application further provides a chip system, including a processor, configured to perform the implementation methods in the first aspect and the second aspect.

According to a tenth aspect, this application further provides a computer program product, including computer-executable instructions. When the computer-executable instructions are run on a computer, the implementation methods in the first aspect and the second aspect are performed.

According to an eleventh aspect, this application further provides a computer-readable storage medium. The computer-readable storage medium stores a computer program or instructions. When the instructions are run on a computer, the implementation methods in the first aspect and the second aspect are implemented.

For technical effects achieved in the second aspect to the eleventh aspect, refer to the technical effects in the first aspect. Details are not described herein again.

### BRIEF DESCRIPTION OF DRAWINGS

FIG. 1 is a diagram of a communication system according to an embodiment of this application;
FIG. 2 is a diagram of a base station according to an embodiment of this application;
FIG. 3a is a diagram of a radio frequency sleep state according to an embodiment of this application;
FIG. 3b is a diagram of carrier shutdown according to an embodiment of this application;
FIG. 4 is a diagram of another type of carrier shutdown according to an embodiment of this application;
FIG. 5 is an example flowchart of an energy saving method according to an embodiment of this application;
FIG. 6 is a diagram of a communication apparatus according to an embodiment of this application;
FIG. 7 is a diagram of another communication apparatus according to an embodiment of this application;
FIG. 8 is a diagram of still another communication apparatus according to an embodiment of this application; and
FIG. 9 is a diagram of yet another communication apparatus according to an embodiment of this application.

### DESCRIPTION OF EMBODIMENTS

For ease of understanding the technical solutions provided in embodiments of this application, the following explains and describes technical terms in embodiments of this application.
(1) A carrier (carrier) is a physical concept, and is a modulated radio electromagnetic wave that carries information. Each carrier occupies a specific range of frequency.
(2) A cell (cell) is a basic unit that provides coverage to meet a communication requirement of a terminal in a wireless communication system. Each cell may correspond to one or more carriers.
(3) A frequency band is a frequency range of an electromagnetic wave. A base station may send the electromagnetic wave in one or more frequency bands, and one frequency band may correspond to one or more carriers.

The technical solutions in embodiments of this application may be applied to a new radio (New Radio, NR) system, a long term evolution (Long Term Evolution, LTE) system, an LTE frequency division duplex (Frequency Division Duplex, FDD) system, an LTE time division duplex (Time Division Duplex, TDD) system, a worldwide interoperability for microwave access (Worldwide Interoperability for Microwave Access, WiMAX) communication system, a 5th generation communication system (5th generation, 5G), and a next generation wireless communication system. This is not limited herein.

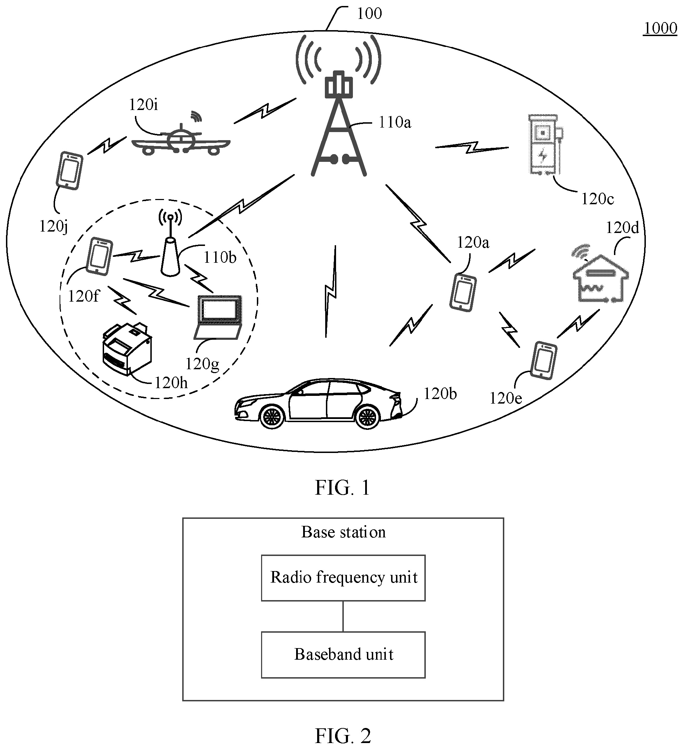

FIG. 1 is a diagram of an architecture of a communication system 1000 to which an embodiment of this application is applied. As shown in FIG. 1, the communication system includes a radio access network 100. The radio access network 100 may include at least one network device (for example, 110a and/or 110b in FIG. 1), and may further include at least one terminal apparatus (for example, at least one of 120a to 120j in FIG. 1). The terminal apparatus is connected to an access network device in a wireless manner, and the access network device is connected to a core network device in a wireless or wired manner. Terminal apparatuses may be connected to each other and network devices may be connected to each other in a wired or wireless manner. FIG. 1 is only a diagram. The communication system may further include other network devices, for example, a wireless relay device and a wireless backhaul device, which are not shown in FIG. 1.

The network device is a network side device having a wireless transceiver function. The network device may be an apparatus that is in a radio access network (radio access network, RAN) and that provides a wireless communication function for a terminal device, and is referred to as a RAN device. For example, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a future mobile communication system, an access node in a Wi-Fi system, or the like; or may be a module or a unit that completes a part of functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete a function of a part or all of physical layers. For specific descriptions of the foregoing protocol layers, refer to technical specifications related to the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In another possible scenario, a plurality of RAN nodes coordinate to assist a terminal in implementing radio access, and different RAN nodes separately implement a part of functions of a base station. For example, the RAN node may be the CU, the DU, a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP and the CU-UP), the DU, and the RU in this application may be implemented by using a software module, a hardware module, or a combination of a software module and a hardware module.

The terminal device is a user-side device having a wireless transceiver function. The terminal device may also be referred to as user equipment (user equipment, UE), a mobile station, a mobile terminal, or the like. The terminal apparatus may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal apparatus may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific apparatus form that are used by the terminal apparatus are not limited in embodiments of this application.

The network device and the terminal device may be at fixed positions, or may be movable. The network device and the terminal device may be deployed on the land, including an indoor device, an outdoor device, a handheld device, or a vehicle-mounted device; may be deployed on the water; or may be deployed on an airplane, a balloon, and a man-made satellite in the air. Application scenarios of the network device and the terminal device are not limited in embodiments of this application.

Roles of the network device and the terminal device may be relative. For example, a helicopter or an unmanned aerial vehicle 120i in FIG. 1 may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between the network devices. In this case, compared with 110a, 120i is also a network device. Therefore, both the network device and the terminal device may be collectively referred to as communication apparatuses. 110a and 110b in FIG. 1 may be referred to as communication apparatuses having a function of the network device, and 120a to 120j in FIG. 1 may be referred to as communication apparatuses having a function of the terminal device.

In this embodiment of this application, the function of the network device may alternatively be performed by a module (for example, a chip) in the network device, or may be performed by a control subsystem having the function of the network device. The control subsystem having the function of the network device may be a control center in the foregoing application scenarios such as the smart grid, the industrial control, the smart transportation, and the smart city. The function of the terminal device may alternatively be performed by a module (for example, a chip or a modem) in the terminal device, or may be performed by an apparatus having the function of the terminal device. The following provides descriptions by using an example in which the function of the terminal device is performed by the terminal and the function of the network device is performed by the base station.

Refer to FIG. 2. A base station may include a radio frequency unit and a baseband unit. The radio frequency unit mainly implements functions of receiving and sending of radio frequency signals, modulation and demodulation of baseband signals, data processing, power amplification, and the like. The baseband unit provides external interfaces and completes system resource management, operation and maintenance, and environment monitoring functions. The radio frequency unit and the baseband unit are connected to each other through an optical fiber, and may communicate with each other through a fronthaul interface.

It should be noted that, the baseband unit may also be referred to as a baseband module, a baseband device, or the like. Similarly, the radio frequency unit may also be referred to as a radio frequency module, a radio frequency device, or the like. This is not specifically limited in this application.

Radio frequency units are necessary for a base station. When terminals access the base station, the radio frequency units keep operating to provide network services. However, if no terminals are accessing the base station, keeping the radio frequency units operational results in unnecessary energy consumption.

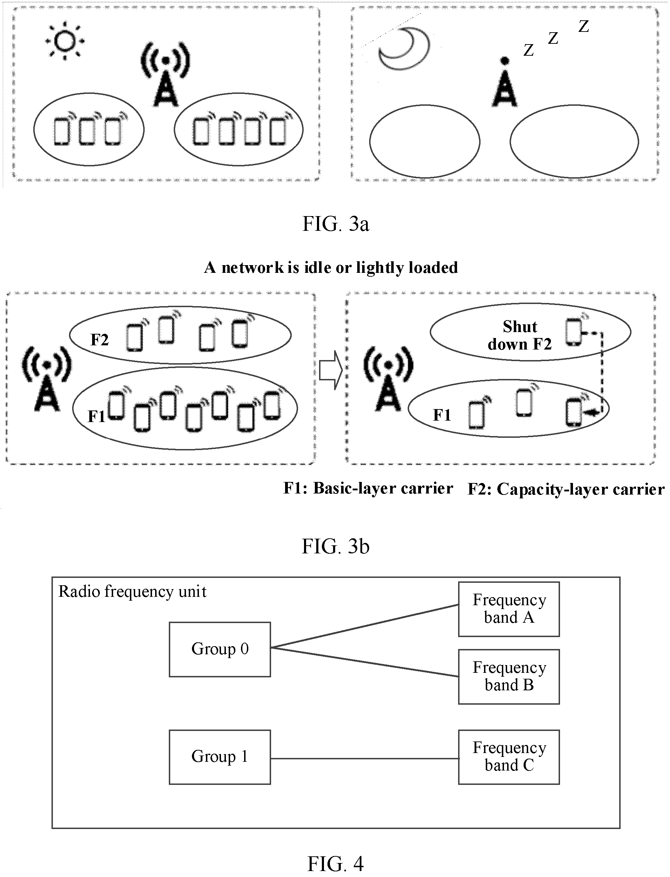

In scenarios when no service is expected during fixed periods, the base station may put the radio frequency units into a sleep state to reduce such unnecessary energy consumption. Refer to FIG. 3a. In the daytime, when terminals access a base station, a radio frequency unit may keep operating to provide network services for the terminals. At midnight, because there are few or no access terminals, the base station may put the radio frequency units to a sleep state. In this case, the radio frequency units cannot provide network services, nor can they send or receive radio frequency signals.

However, in the foregoing dormancy manner of the radio frequency units, the base station may put some or all radio frequency units into the sleep state, and therefore, some or all carriers corresponding to the radio frequency units may be shut down. However, the base station cannot sense the service load state of the carriers and lacks the capability to adjust carrier shutdown based on the service load.

The following describes a method for shutting down the carrier.

During some periods, for example, in the early morning, cells managed by the base station may be idle or lightly loaded, yet the radio frequency units remain in the operating state. In such cases, few or no terminals use the radio frequency signals. Therefore, energy consumption caused by the radio frequency signals is unnecessary. Because radio frequency signals are sent through carriers, shutting down the carriers sending the radio frequency signals in the frequency domain ensures that the radio frequency units have no carriers in the operating state, thereby reducing unnecessary energy consumption.

Refer to FIG. 3b. During fixed periods, in multi-frequency multi-carrier co-coverage networking scenarios in which a cell managed by a base station is idle or lightly loaded, the base station may dynamically shut down capacity-layer carriers used to provide capacity absorption during peak hours of services, and migrate users on the capacity-layer carriers to basic-layer carriers used to provide basic network coverage. When the load is high, the base station dynamically enables the capacity-layer carrier to ensure normal service running.

However, the foregoing carrier shutdown technology can only be used to control and adjust the service load, but cannot achieve an optimal shutdown mode for the radio frequency unit. In the foregoing carrier shutdown technology, although a part of carriers is shut down, even if some carriers are shut down, the radio frequency units corresponding to the carriers still have carriers in the operating state. As a result, the base station cannot put the radio frequency unit into a sleep state, and energy consumption cannot be reduced.

Refer to FIG. 4. It is assumed that a base station supports a frequency band A, a frequency band B, and a frequency band C. It may be understood that, each frequency band may correspond to one or more carriers. The frequency band A and the frequency band B are in one group, and are controlled by a device of a radio frequency unit. The frequency band C is in one group, and is controlled by a device of the radio frequency unit. The frequency band A, the frequency band B, and the frequency band C are in one group. When a carrier corresponding to the frequency band A is idle or lightly loaded, the base station disables the carrier corresponding to the frequency band A, for example, disables the frequency band A. However, the frequency band A and the frequency band B are in one group, and are controlled by the device of the radio frequency unit. Therefore, although the base station disables the frequency band A, the frequency band B is in an operating state. As a result, the device of the radio frequency unit also needs to be in an operating state, and energy consumption cannot be reduced.

In view of this, embodiments of this application provide an energy saving method. In the method, a radio frequency unit may send a carrier group and/or a frequency band group to a baseband unit; the baseband unit may determine, based on the carrier group and/or the frequency band group, configuration information for energy saving, and send the configuration information to the radio frequency unit, where the configuration information may indicate a to-be-shut-down carrier and/or a to-be-shut-down frequency band; and the radio frequency unit may shut down, based on the configuration information, a corresponding device, like a power amplifier, to achieve energy saving.

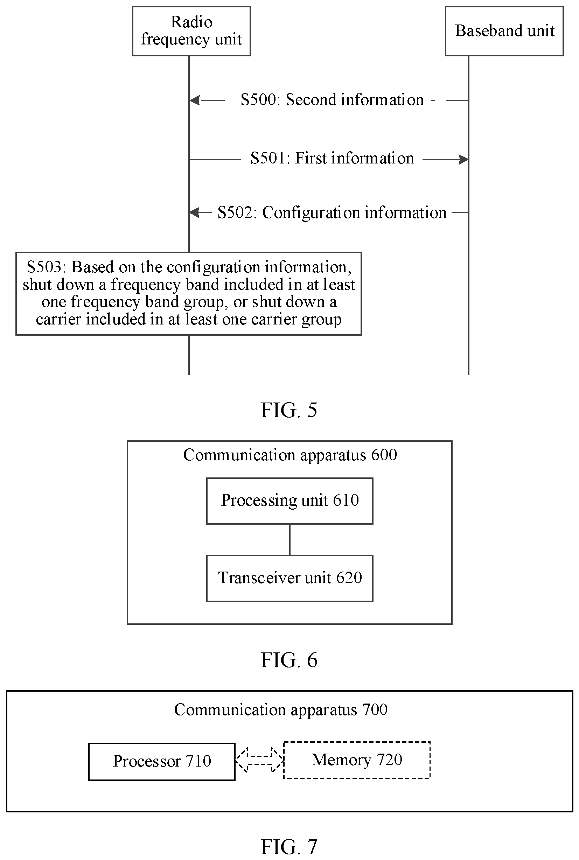

FIG. 5 is an example flowchart of an energy saving method according to an embodiment of this application. The method may include the following operations.

S501: A radio frequency unit sends first information to a baseband unit.

Correspondingly, the baseband unit receives the first information from the radio frequency unit.

The first information may indicate one or more carrier groups and/or one or more frequency band groups. It may be understood that, one carrier group may include one or more carriers, and one frequency band group may include one or more frequency bands. For example, the first information may indicate one or more carrier groups. For another example, the first information may indicate one or more frequency band groups. For still another example, the first information may indicate one or more carrier groups and one or more frequency band groups. Optionally, the first information may be energy saving policy information.

Optionally, the embodiment shown in FIG. 5 may further include the following operation S500.

S500: The baseband unit sends second information to the radio frequency unit.

Correspondingly, the radio frequency unit receives the second information from the baseband unit.

The second information may be used to request, query, or obtain the first information. The baseband unit may indicate, by using the second information, the radio frequency unit to send the first information to the baseband unit.

In a possible case, the first information may include an identifier of the frequency band included in the one or more frequency band groups, and/or an identifier of the carrier included in the one or more carrier groups. For example, the first information may include an identifier of the one or more frequency band groups, and an identifier of a frequency band included in each frequency band group, to indicate the one or more frequency band groups. For example, as shown in FIG. 4, the first information may include a group (group) 0 and a group 1, the group 0 includes a frequency band A and a frequency band B, and the group 1 includes a frequency band C.

For another example, the first information may include an identifier of the one or more carrier groups and an identifier of a carrier included in each carrier group, to indicate the one or more carrier groups. For example, the first information may include a group (group) 0, a group 1, and a group 2, the group 0 includes a carrier A and a carrier B, the group 1 includes a carrier C, and the group 2 includes a carrier D and a carrier E.

For still another example, the first information may include an identifier of the one or more frequency band groups, and an identifier of a frequency band included in each frequency band group, to indicate the one or more frequency band groups. The first information may also include an identifier of the one or more carrier groups, and an identifier of a carrier included in each carrier group, to indicate the one or more carrier groups. Details are not repeated.

The first information may be used to determine a to-be-shut-down frequency band group or carrier group. For example, the baseband unit may determine a carrier group and/or a frequency band group on the radio frequency unit based on the first information, to determine the to-be-shut-down frequency band group or carrier group. For example, the baseband unit may determine which frequency band groups or carrier groups are to be shut down, so that a device of the radio frequency unit can be in a sleep state, thereby achieving energy saving.

Refer to FIG. 4. The first information sent by the radio frequency unit to the baseband unit includes the frequency band A and the frequency band B in one group, the frequency band C in one group, and the frequency band A, the frequency band B, and the frequency band C in one group. The baseband unit may determine that, to achieve the objective of energy saving, the frequency band A and the frequency band B need to be shut down, the frequency band C needs to be shut down, or the frequency band A, the frequency band B, and the frequency band C all need to be shut down. That is, the baseband unit may determine that to-be-shut-down frequency band groups are respectively the group of the frequency band A and the frequency band B, the group of the frequency band C, and the group of the frequency band A, the frequency band B, and the frequency band C. The baseband unit may determine, based on a requirement, for example, a service requirement and an energy saving requirement, which to-be-shut-down group is to be used. Optionally, the baseband unit may migrate a terminal on a frequency band that needs to be shut down to another frequency band, and indicate the radio frequency unit to shut down the corresponding frequency band. For example, it is assumed that the baseband unit determines to use the to-be-shut-down group of the frequency band A and the frequency band B, the baseband unit may migrate or drive terminals on the frequency band A and the frequency band B to the frequency band C, and indicate the radio frequency unit to shut down the frequency band A and the frequency band B. Compared with related technologies where carriers are shut down only based on service load, this solution can further improve the energy saving effect.

In another possible implementation, the first information may further include a priority corresponding to the one or more frequency band groups, and/or a priority corresponding to the one or more carrier groups. For example, the first information may include the one or more frequency band groups and the priority corresponding to the one or more frequency band groups. For another example, the first information may include the one or more carrier groups and the priority corresponding to the one or more carrier groups. For still another example, the first information may include the one or more frequency band groups, the priority of the one or more frequency band groups, the one or more carrier groups, and the priority corresponding to the one or more carrier groups.

In a possible case, the priority may represent an energy saving priority. For example, a higher priority represents a higher energy saving priority and a better energy saving effect, and a lower priority represents a lower priority of energy saving and a poorer energy saving effect. Alternatively, a lower priority represents a higher energy saving priority and a better energy saving effect, and a higher priority represents a lower priority of energy saving and a poorer energy saving effect.

Refer to FIG. 4. The first information sent by the radio frequency unit to the baseband unit includes the frequency band A and the frequency band B in one group, the frequency band C in one group, and the frequency band A, the frequency band B, and the frequency band C in one group. The group of the frequency band A, the frequency band B, and the frequency band C corresponds to the highest priority, which therefore may represent the highest priority of energy saving and the best energy saving effect. The group of the frequency band A and the frequency band B corresponds to a second highest priority, which therefore may represent a relatively high priority of energy saving and a relatively good energy saving effect. The group of the frequency band C corresponds to the lowest priority, which therefore may represent the lowest priority of energy saving and an insignificant energy saving effect.

The priority may be used to determine the to-be-shut-down frequency band group or carrier group. For example, the baseband unit may determine a carrier group and/or a frequency band group on the radio frequency unit and a corresponding priority based on the first information, to determine the to-be-shut-down frequency band group or carrier group. For example, the baseband unit may determine which frequency band groups or carrier groups are to be disabled, so that the device of the radio frequency unit can be in the sleep state, thereby achieving the objective of energy saving. In addition, the baseband unit may determine, based on the priority, which frequency band groups or carrier groups are to be disabled, so that a good energy saving effect can be achieved. For example, the baseband unit may determine to shut down a carrier or a frequency band included in a to-be-shut-down group with the highest priority. For another example, the baseband unit may determine to shut down a frequency band included in K1 to-be-shut-down groups with high priorities. For still another example, the baseband unit may determine to shut down a carrier included in K2 to-be-shut-down groups with high priorities. Both K1 and K2 are integers greater than or equal to 1, and K1 and K2 may be the same or may be different.

Refer to FIG. 4. The first information sent by the radio frequency unit to the baseband unit includes the frequency band A and the frequency band B in one group, the frequency band C in one group, and the frequency band A, the frequency band B, and the frequency band C in one group. The group of the frequency band A, the frequency band B, and the frequency band C corresponds to the highest priority, which therefore may represent the highest priority of energy saving and the best energy saving effect. The group of the frequency band A and the frequency band B corresponds to a second highest priority, which therefore may represent a relatively high priority of energy saving and a relatively good energy saving effect. The group of the frequency band C corresponds to the lowest priority, which therefore may represent the lowest priority of energy saving and an insignificant energy saving effect.

The baseband unit may determine that, to achieve the objective of energy saving, the frequency band A and the frequency band B need to be shut down, the frequency band C needs to be shut down, or the frequency band A, the frequency band B, and the frequency band C all need to be shut down. That is, the baseband unit may determine that to-be-shut-down frequency band groups are respectively the group of the frequency band A and the frequency band B, the group of the frequency band C, and the group of the frequency band A, the frequency band B, and the frequency band C. An energy saving effect of shutting down all the frequency band A, the frequency band B, and the frequency band C is the best, an energy saving effect of shutting down the frequency band A and the frequency band B is poorer than the energy saving effect of shutting down all the frequency band A, the frequency band B, and the frequency band C, and an energy saving effect of shutting down the frequency band C is poorer than the energy saving effect of shutting down the frequency band A and the frequency band B.

The baseband unit may determine, based on the priority, which frequency band groups or carrier groups are to be disabled, so that a good energy saving effect can be achieved. For example, the baseband unit may determine to shut down a carrier or a frequency band included in a to-be-shut-down group with the highest priority, that is, the baseband unit may determine to shut down the frequency band A, the frequency band B, and the frequency band C, to achieve a good energy saving effect. In comparison with the technical solution in which a carrier is shut down only based on a service load in the conventional technology, the energy saving effect can be improved. In addition, an energy saving manner with a good effect can be determined based on the priority.

In this embodiment of this application, the baseband unit may determine the to-be-shut-down carrier group or frequency band group based on the first information. Optionally, the baseband unit may determine the to-be-shut-down carrier group or frequency band group based on the first information and a service load. For example, the baseband unit may determine the to-be-shut-down carrier group or frequency band group based on the first information, and determines an energy saving effect of each to-be-shut-down group based on the priority. The baseband unit may obtain the service load of the carrier, that is, the baseband unit may determine a load corresponding to each carrier or each frequency band, to determine to shut down a carrier or a frequency band included in a to-be-shut-down group in which a carrier or frequency band with a low load is located.

Refer to FIG. 4. The first information sent by the radio frequency unit to the baseband unit includes the frequency band A and the frequency band B in one group, the frequency band C in one group, and the frequency band A, the frequency band B, and the frequency band C in one group. The group of the frequency band A, the frequency band B, and the frequency band C corresponds to the highest priority, which therefore may represent the highest priority of energy saving and the best energy saving effect. The group of the frequency band A and the frequency band B corresponds to a second highest priority, which therefore may represent a relatively high priority of energy saving and a relatively good energy saving effect. The group of the frequency band C corresponds to the lowest priority, which therefore may represent the lowest priority of energy saving and an insignificant energy saving effect.

The baseband unit may determine that, to achieve the objective of energy saving, the frequency band A and the frequency band B need to be shut down, the frequency band C needs to be shut down, or the frequency band A, the frequency band B, and the frequency band C all need to be shut down. That is, the baseband unit may determine that to-be-shut-down frequency band groups are respectively the group of the frequency band A and the frequency band B, the group of the frequency band C, and the group of the frequency band A, the frequency band B, and the frequency band C. An energy saving effect of shutting down all the frequency band A, the frequency band B, and the frequency band C is the best, an energy saving effect of shutting down the frequency band A and the frequency band B is poorer than the energy saving effect of shutting down all the frequency band A, the frequency band B, and the frequency band C, and an energy saving effect of shutting down the frequency band C is poorer than the energy saving effect of shutting down the frequency band A and the frequency band B.

In an example, the baseband unit may obtain the service load, and determine that the frequency band A and the frequency band C are in light-load states and the frequency band B is in a high-load state. The baseband unit may determine, based on the requirement, for example, the service requirement and the energy saving requirement, a frequency band that needs to be shut down. If the baseband unit shuts down the frequency band A, the frequency band B cannot be shut down because the frequency band B is in the high-load state. As a result, the object of energy saving cannot be achieved. Therefore, the baseband unit may determine to shut down the frequency band C. Although the energy saving effect of shutting down the frequency band C is the lowest, considering the to-be-shut-down group and the service load, the baseband unit may determine that the energy saving effect of shutting down the frequency band C is the best. Optionally, the baseband unit may migrate a terminal on the frequency band C to the frequency band A and the frequency band B, and indicate the radio frequency unit to shut down the frequency band C.

In another example, the baseband unit may obtain the service load, and determine that the frequency band A and the frequency band B are in light-load states and the frequency band C is in a high-load state. The baseband unit may determine, based on the requirement, for example, the service requirement and the energy saving requirement, a frequency band that needs to be shut down. The frequency band A and the frequency band B are in the same to-be-shut-down group that corresponds to a second highest priority. Considering the to-be-shut-down group and the service load, the baseband unit may determine that the energy saving effect of shutting down the frequency band A and the frequency band B is the best. Optionally, the baseband unit may migrate terminals on the frequency band A and the frequency band B to the frequency band C, and indicate the radio frequency unit to shut down the frequency band A and the frequency band B.

S502: The baseband unit sends configuration information to the radio frequency unit.

Correspondingly, the radio frequency unit receives the configuration information from the baseband unit.

The configuration information may indicate to shut down a frequency band included in at least one of the one or more frequency band groups, or the configuration information may indicate to shut down a carrier included in at least one of the one or more carrier groups.

In a possible implementation, the configuration information may indicate to shut down the frequency band included in the at least one of the one or more frequency band groups. For example, the configuration information may indicate to delete one or more carriers on the frequency band included in the at least one frequency band group. For another example, the configuration information may indicate to deactivate one or more carriers on the frequency band included in the at least one frequency band group. For still another example, the configuration information may indicate to block one or more carriers on the frequency band included in the at least one frequency band group. For yet another example, the configuration information may indicate to disable one or more carriers on the frequency band included in the at least one frequency band group. If the configuration information indicates to shut down a frequency band included in all of the one or more frequency band groups, the configuration information may indicate to enter a radio frequency sleep state.

In another possible implementation, the configuration information may indicate to shut down the carrier included in the at least one of the one or more carrier groups. For example, the configuration information may indicate to delete the carrier included in the at least one carrier group. For another example, the configuration information may indicate to deactivate the carrier included in the at least one carrier group. For still another example, the configuration information may indicate to block the carrier included in the at least one carrier group. For yet another example, the configuration information may indicate to disable the carrier included in the at least one carrier group. If the configuration information indicates to shut down a carrier included in all of the one or more carrier groups, the configuration information may indicate to enter a radio frequency sleep state.

Based on the implementation in S501, the baseband unit may determine which to-be-shut-down carrier group or frequency band group is to be shut down, to achieve the objective of energy saving. Therefore, the baseband unit may determine the configuration information based on the determined to-be-shut-down group. It is assumed that in FIG. 4, the baseband unit determines that the frequency band A and the frequency band B need to be shut down, the baseband unit may indicate, by using the configuration information, the radio frequency unit to shut down carriers on the frequency band A and the frequency band B included in the frequency band group 0.

S503: Based on the configuration information, the radio frequency unit shuts down the frequency band included in the at least one frequency band group, or shuts down the carrier included in the at least one carrier group.

In a possible implementation, the configuration information may indicate to shut down the frequency band included in the at least one of the one or more frequency band groups. In this case, the radio frequency unit may shut down the frequency band included in the at least one frequency band group. For example, the radio frequency unit may delete one or more carriers on the frequency band included in the at least one frequency band group. For another example, the radio frequency unit may deactivate one or more carriers on the frequency band included in the at least one frequency band group. For still another example, the radio frequency unit may block one or more carriers on the frequency band included in the at least one frequency band group. For yet another example, the radio frequency unit may disable one or more carriers on the frequency band included in the at least one frequency band group. If the configuration information indicates to shut down a frequency band included in all of the one or more frequency band groups, the radio frequency unit may enter a radio frequency sleep state.

In another possible implementation, the configuration information may indicate to shut down the carrier included in the at least one of the one or more carrier groups. In this case, the radio frequency unit may shut down the carrier included in the at least one carrier group. For example, the radio frequency unit may delete the carrier included in the at least one carrier group. For another example, the radio frequency unit may deactivate the carrier included in the at least one carrier group. For still another example, the radio frequency unit may block the carrier included in the at least one carrier group. For yet another example, the radio frequency unit may disable the carrier included in the at least one carrier group. If the configuration information indicates to shut down a carrier included in all of the one or more carrier groups, the radio frequency unit may enter a radio frequency sleep state.

The energy saving method provided in this embodiment of this application may be applied to an O-RAN scenario. In the O-RAN scenario, the radio frequency unit and the baseband unit may be from different vendors. Therefore, the radio frequency unit sends the first information to the baseband unit, so that the baseband unit can obtain a to-be-shut-down carrier group or frequency band group of the radio frequency unit. Then, the baseband unit may determine, based on the energy saving requirement and the service requirement, which to-be-shut-down group of the radio frequency unit is to be shut down, and indicate the to-be-shut-down group to the radio frequency unit by using the configuration information. The radio frequency unit may shut down a corresponding device, carrier, or frequency band based on the configuration information, so that the objective of energy saving can be achieved.

Operations performed by the baseband unit may be performed by a BBU, a CU, a DU, or a CU-CP. Operations performed by the radio frequency unit may be performed by an RRU or an RU.
For example, the RRU may send the first information to the BBU. The BBU may determine to the configuration information sent to the RRU. For example, the RU sends the first information to the CU, the CU may send the first information to the DU, the DU may determine the configuration information, and send the configuration information to the CU, and the CU may send the configuration information to the RU. For example, the RU sends the first information to the CU-CP, the CU-CP may send the first information to the DU, the DU may determine the configuration information, and send the configuration information to the CU-CP, and the CU-CP may send the configuration information to the RU. For example,in the O-RAN scenario, operations performed by the CU may be performed by an O-CU, operations performed by the DU may be performed by an O-DU, operations performed by the CU-CP may be performed by an O-CU-CP, and operations performed by the RU may be performed by an O-RU.

A communication apparatus provided in embodiments of this application is described based on the following embodiments. FIG. 6 is a schematic block diagram of a communication apparatus 600 according to an embodiment of this application. The communication apparatus 600 may correspondingly implement functions or steps implemented by the radio frequency unit or the baseband unit in the foregoing method embodiments. The communication apparatus may include a processing unit 610 and a transceiver unit 620. Optionally, the communication apparatus may further include a storage unit, where the storage unit may be configured to store instructions (code or a program) and/or data. The processing unit 610 and the transceiver unit 620 may be coupled to the storage unit. For example, the processing unit 610 may read the instructions (the code or the program) and/or the data in the storage unit, to implement a corresponding method. The foregoing units may be independently disposed, or may be partially or completely integrated.

Optionally, the transceiver unit 620 may include a sending unit and a receiving unit. The sending unit may be configured to perform all sending operations performed by the communication apparatus 600, and the receiving unit may be configured to perform all receiving operations performed by the communication apparatus 600.

In some possible implementations, the communication apparatus 600 can correspondingly implement behavior and functions of the radio frequency unit and the like in the foregoing method embodiments. For example, the communication apparatus 600 may be a radio frequency unit, or may be a component (for example, a chip or a circuit) applied to a radio frequency unit. The transceiver unit 620 may be configured to perform all receiving or sending operations performed by the radio frequency unit in the embodiment shown in FIG. 5, for example, S501 in the embodiment shown in FIG. 5, and/or configured to support another process of the technology described in this specification. The processing unit 610 is configured to perform all operations other than the receiving or sending operations performed by the radio frequency unit in the embodiment shown in FIG. 5.

For example, the transceiver unit 620 is configured to send first information, where the first information indicates one or more carrier groups and/or one or more frequency band groups, one carrier group includes one or more carriers, and one frequency band group includes one or more frequency bands, where the transceiver unit 620 is further configured to receive configuration information, where the configuration information is determined based on the first information, and the configuration information indicates to shut down a frequency band included in at least one of the one or more frequency band groups, or the configuration information indicates to shut down a carrier included in at least one of the one or more carrier groups; and based on the configuration information, the processing unit 610 is configured to shut down the frequency band included in the at least one of the one or more frequency band groups, or shut down the carrier included in the at least one of the one or more carrier groups.

In some possible implementations, the communication apparatus 600 can correspondingly implement behavior and functions of the baseband unit and the like in the foregoing method embodiments. For example, the communication apparatus 600 may be a baseband unit, or may be a component (for example, a chip or a circuit) applied to a baseband unit. The transceiver unit 620 may be configured to perform all receiving or sending operations performed by the baseband unit in the embodiment shown in FIG. 5, for example, S501 in the embodiment shown in FIG. 5, and/or configured to support another process of the technology described in this specification. The processing unit 610 is configured to perform all operations other than the receiving or sending operations performed by the baseband unit in the embodiment shown in FIG. 5.

For example, the transceiver unit 620 is configured to receive first information, where the first information indicates one or more carrier groups and/or one or more frequency band groups, one carrier group includes one or more carriers, and one frequency band group includes one or more frequency bands; and the processing unit 610 is configured to determine configuration information, where the configuration information is determined based on the first information, and the configuration information indicates to shut down a frequency band included in at least one of the one or more frequency band groups, or the configuration information indicates to shut down a carrier included in at least one of the one or more carrier groups, where the transceiver unit 620 is further configured to send the configuration information.

For operations performed by the processing unit 610 and the transceiver unit 620, refer to the related descriptions in the foregoing method embodiments.

The processing unit 610 in this embodiment of this application may be implemented by a processor, a processor-related circuit component, or a chip, and the transceiver unit 620 may be implemented by a transceiver, a transceiver-related circuit component, or a communication interface.

Based on a same concept, as shown in FIG. 7, an embodiment of this application provides a communication apparatus 700. The communication apparatus 700 includes a processor 710. Optionally, the communication apparatus 700 may further include a memory 720 configured to store instructions to be executed by the processor 710, store input data required by the processor 710 to run the instructions, or store data generated after the processor 710 runs the instructions. The processor 710 may implement the methods shown in the foregoing method embodiments by using the instructions stored in the memory 720.

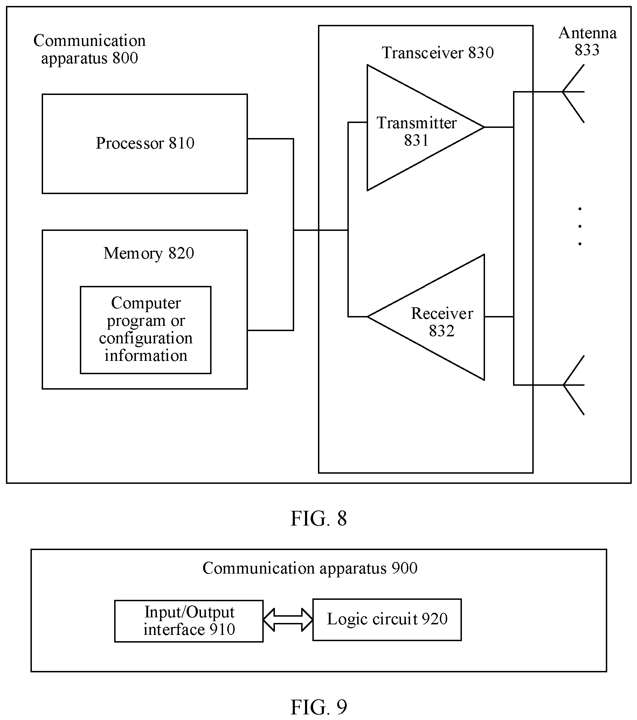

Based on a same concept, as shown in FIG. 8, an embodiment of this application provides a communication apparatus 800. The communication apparatus 800 may be a chip or a chip system. Optionally, in this embodiment of this application, the chip system may include a chip, or may include a chip and another discrete device.

The communication apparatus 800 may include at least one processor 810. The processor 810 is coupled to a memory. Optionally, the memory may be located inside the apparatus, or may be located outside the apparatus. For example, the communication apparatus 800 may further include at least one memory 820. The memory 820 stores a computer program, configuration information, a computer program or instructions, and/or data necessary for implementing any one of the foregoing embodiments. The processor 810 may execute the computer program stored in the memory 820, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 810 may cooperate with the memory 820. A specific connection medium between a transceiver 830, the processor 810, and the memory 820 is not limited in this embodiment of this application.

The communication apparatus 800 may further include the transceiver 830, and the communication apparatus 800 may exchange information with another device via the transceiver 830. The transceiver 830 may be a circuit, a bus, a transceiver, or any other apparatus that can be configured to exchange information, or is referred to as a signal transceiver unit. As shown in FIG. 8, the transceiver 830 includes a transmitter 831, a receiver 832, and an antenna 833. In addition, when the communication apparatus 800 is a chip type apparatus or circuit, the transceiver in the communication apparatus 800 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 800 may be applied to a radio frequency unit. Specifically, the communication apparatus 800 may be a radio frequency unit, or may be an apparatus that can support a radio frequency unit in implementing functions of the radio frequency unit in any one of the foregoing embodiments. The memory 820 stores a computer program, a computer program or instructions, and/or data necessary for implementing functions of the radio frequency unit in any one of the foregoing embodiments. The processor 810 may execute the computer program stored in the memory 820, to complete the method performed by the radio frequency unit in any one of the foregoing embodiments.

In a possible implementation, the communication apparatus 800 may be applied to a baseband unit. Specifically, the communication apparatus 800 may be a baseband unit, or may be an apparatus that can support a baseband unit in implementing functions of the baseband unit in any one of the foregoing embodiments. The memory 820 stores a computer program, a computer program or instructions, and/or data necessary for implementing functions of the baseband unit in any one of the foregoing embodiments. The processor 810 may execute the computer program stored in the memory 820, to complete the method performed by the baseband unit in any one of the foregoing embodiments.

The communication apparatus 800 provided in this embodiment may be applied to the radio frequency unit to complete the method executed by the radio frequency unit, or may be applied to the baseband unit to complete the method executed by the baseband unit. Therefore, for a technical effect that can be achieved, refer to the foregoing method embodiments. Details are not described herein again.

In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware and software module groups in a processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of instructions or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

According to the foregoing embodiments, refer to FIG. 9. An embodiment of this application further provides another communication apparatus 900, including an input/output interface 910 and a logic circuit 920. The input/output interface 910 is configured to receive code instructions and transmit the code instructions to the logic circuit 920. The logic circuit 920 is configured to run the code instructions to perform the method performed by the radio frequency unit or the baseband unit in any one of the foregoing embodiments.

Optionally, the input/output interface 910 may be an interface on a chip, and the logic circuit 920 may be one or more processors. Optionally, the one or more processors may be located in the apparatus, or may be located outside the apparatus.

The following describes in detail operations performed by the communication apparatus applied to the radio frequency unit or the baseband unit.

In an optional implementation, the communication apparatus 900 may be applied to the radio frequency unit, to perform the method performed by the radio frequency unit, and specifically, for example, the method performed by the radio frequency unit in the embodiment shown in FIG. 5.

For example, the input/output interface 910 is configured to send first information, where the first information indicates one or more carrier groups and/or one or more frequency band groups, one carrier group includes one or more carriers, and one frequency band group includes one or more frequency bands, where the input/output interface 910 is further configured to receive configuration information, where the configuration information is determined based on the first information, and the configuration information indicates to shut down a frequency band included in at least one of the one or more frequency band groups, or the configuration information indicates to shut down a carrier included in at least one of the one or more carrier groups; and based on the configuration information, the logic circuit 920 is configured to shut down the frequency band included in the at least one of the one or more frequency band groups, or shut down the carrier included in the at least one of the one or more carrier groups.

The communication apparatus 900 provided in this embodiment may be applied to the radio frequency unit to complete the method executed by the radio frequency unit. Therefore, for a technical effect that can be achieved, refer to the foregoing method embodiments. Details are not described herein again.

In an optional implementation, the communication apparatus 900 may be applied to the baseband unit, to perform the method performed by the baseband unit, and specifically, for example, the method performed by the baseband unit in the embodiment shown in FIG. 5.

For example, the input/output interface 910 is configured to receive first information, where the first information indicates one or more carrier groups and/or one or more frequency band groups, one carrier group includes one or more carriers, and one frequency band group includes one or more frequency bands; and the logic circuit 920 is configured to determine configuration information, where the configuration information is determined based on the first information, and the configuration information indicates to shut down a frequency band included in at least one of the one or more frequency band groups, or the configuration information indicates to shut down a carrier included in at least one of the one or more carrier groups, where the input/output interface 910 is further configured to send the configuration information.

The communication apparatus 900 provided in this embodiment may be applied to the baseband unit to complete the method executed by the baseband unit. Therefore, for a technical effect that can be achieved, refer to the foregoing method embodiments. Details are not described herein again.

According to the foregoing embodiments, an embodiment of this application further provides a communication system. The communication system includes at least one communication apparatus used in a radio frequency unit and at least one communication apparatus used in a baseband unit. For technical effects that can be achieved, refer to the foregoing method embodiments. Details are not described herein again.

Based on the foregoing embodiments, an embodiment of this application further provides a system. The communication system includes at least one baseband unit and a radio frequency unit.

Based on the foregoing embodiments, an embodiment of this application further provides a computer-readable storage medium. The computer-readable storage medium stores a computer program or instructions. When the instructions are executed, the method performed by the radio frequency unit or the method performed by the baseband unit in any one of the foregoing embodiments is implemented. The computer-readable storage medium may include any medium that may store program code, such as a USB flash drive, a removable hard disk drive, a read-only memory, a random access memory, a magnetic disk, or an optical disc.

To implement the functions of the communication apparatuses in FIG. 6 to FIG. 9, an embodiment of this application further provides a chip, including a processor, configured to support the communication apparatuses in implementing the functions of the radio frequency unit or the baseband unit in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that, a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can instruct the computer or the another programmable data processing device to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that the modifications and variations fall within the scope of protection defined by the following claims of this application and their equivalent technologies.

## Claims

1. An energy saving method, comprising:
receiving first information, wherein the first information indicates one or more carrier groups and/or one or more frequency band groups, one carrier group comprises one or more carriers, and one frequency band group comprises one or more frequency bands; and
sending configuration information, wherein the configuration information is determined based on the first information, and the configuration information indicates to shut down a frequency band comprised in at least one of the one or more frequency band groups, or the configuration information indicates to shut down a carrier comprised in at least one of the one or more carrier groups.

2. The method according to claim 1, wherein the first information comprises an identifier of the carrier comprised in the one or more carrier groups, and/or the first information comprises an identifier of the frequency band comprised in the one or more frequency band groups.

3. The method according to claim 1 or 2, wherein that the configuration information indicates to shut down the frequency band comprised in the at least one of the one or more frequency band groups comprises:
the configuration information indicates to delete one or more carriers on the frequency band comprised in the at least one frequency band group;
the configuration information indicates to deactivate one or more carriers on the frequency band comprised in the at least one frequency band group;
the configuration information indicates to block one or more carriers on the frequency band comprised in the at least one frequency band group;
the configuration information indicates to disable one or more carriers on the frequency band comprised in the at least one frequency band group; or
the configuration information indicates to enter a radio frequency sleep state.

4. The method according to any one of claims 1 to 3, wherein the first information further comprises a priority corresponding to the one or more frequency band groups, and/or the first information further comprises a priority corresponding to the one or more carrier groups, wherein each priority represents an energy saving priority and is used to determine the configuration information.

5. The method according to claim 4, wherein a higher priority represents a higher energy saving priority, and that the configuration information indicates to shut down the frequency band comprised in the at least one of the one or more frequency band groups, or the configuration information indicates to shut down the carrier comprised in the at least one of the one or more carrier groups comprises:
the configuration information indicates to shut down a frequency band comprised in K1 frequency band groups with higher priorities among the one or more frequency band groups, or the configuration information indicates to shut down a carrier comprised in K2 carrier groups with higher priorities among the one or more carrier groups, wherein
K1 and K2 are integers greater than or equal to 1.

6. The method according to any one of claims 1 to 5, further comprising:
sending second information, wherein the second information is used to request the first information.

7. An energy saving method, comprising:
sending first information, wherein the first information indicates one or more carrier groups and/or one or more frequency band groups, one carrier group comprises one or more carriers, and one frequency band group comprises one or more frequency bands;
receiving configuration information, wherein the configuration information is determined based on the first information, and the configuration information indicates to shut down a frequency band comprised in at least one of the one or more frequency band groups, or the configuration information indicates to shut down a carrier comprised in at least one of the one or more carrier groups; and
based on the configuration information, shutting down the frequency band comprised in the at least one of the one or more frequency band groups, or shutting down the carrier comprised in the at least one of the one or more carrier groups.

8. The method according to claim 7, wherein the first information comprises an identifier of the carrier comprised in the one or more carrier groups, and/or the first information comprises an identifier of the frequency band comprised in the one or more frequency band groups.

9. The method according to claim 7 or 8, wherein the shutting down the frequency band comprised in the at least one of the one or more frequency band groups comprises:
deleting one or more carriers on the frequency band comprised in the at least one frequency band group;
deactivating one or more carriers on the frequency band comprised in the at least one frequency band group;
blocking one or more carriers on the frequency band comprised in the at least one frequency band group;
disabling the frequency band comprised in the at least one frequency band group; or
entering a radio frequency sleep state.

10. The method according to any one of claims 7 to 9, wherein the first information further comprises a priority corresponding to the one or more frequency band groups, and/or the first information further comprises a priority corresponding to the one or more carrier groups, wherein each priority represents an energy saving priority and is used to determine the configuration information.

11. The method according to claim 10, wherein a higher priority represents a higher energy saving priority, and that the configuration information indicates to shut down the frequency band comprised in the at least one of the one or more frequency band groups, or the configuration information indicates to shut down the carrier comprised in the at least one of the one or more carrier groups comprises:
the configuration information indicates to shut down a frequency band comprised in K1 frequency band groups with higher priorities among the one or more frequency band groups, or the configuration information indicates to shut down a carrier comprised in K2 carrier groups with higher priorities among the one or more carrier groups, wherein
K1 and K2 are integers greater than or equal to 1.

12. The method according to any one of claims 7 to 11, further comprising:
receiving second information, wherein the second information is used to request the first information.

13. A communication apparatus, comprising:
a transceiver unit, configured to receive first information, wherein the first information indicates one or more carrier groups and/or one or more frequency band groups, one carrier group comprises one or more carriers, and one frequency band group comprises one or more frequency bands; and
a processing unit, configured to determine configuration information, wherein the configuration information is determined based on the first information, and the configuration information indicates to shut down a frequency band comprised in at least one of the one or more frequency band groups, or the configuration information indicates to shut down a carrier comprised in at least one of the one or more carrier groups;
wherein the transceiver unit is further configured to send the configuration information.

14. The apparatus according to claim 13, wherein the first information comprises an identifier of the carrier comprised in the one or more carrier groups, and/or the first information comprises an identifier of the frequency band comprised in the one or more frequency band groups.

15. The apparatus according to claim 13 or 14, wherein the processing unit is specifically configured to:
the configuration information indicates to delete one or more carriers on the frequency band comprised in the at least one frequency band group;
the configuration information indicates to deactivate one or more carriers on the frequency band comprised in the at least one frequency band group;
the configuration information indicates to block one or more carriers on the frequency band comprised in the at least one frequency band group;
the configuration information indicates to disable the frequency band comprised in the at least one frequency band group; or
the configuration information indicates to enter a radio frequency sleep state.

16. The apparatus according to any one of claims 13 to 15, wherein the first information further comprises a priority corresponding to the one or more frequency band groups, and/or the first information further comprises a priority corresponding to the one or more carrier groups, wherein each priority represents an energy saving priority and is used to determine the configuration information.

17. The apparatus according to claim 16, wherein a higher priority represents a higher energy saving priority, and that the configuration information indicates to shut down the frequency band comprised in the at least one of the one or more frequency band groups, or the configuration information indicates to shut down the carrier comprised in the at least one of the one or more carrier groups comprises:
the configuration information indicates to shut down a frequency band comprised in K1 frequency band groups with higher priorities among the one or more frequency band groups, or the configuration information indicates to shut down a carrier comprised in K2 carrier groups with higher priorities among the one or more carrier groups, wherein
K1 and K2 are integers greater than or equal to 1.

18. The apparatus according to any one of claims 13 to 17, wherein the transceiver unit is further configured to:
send second information, wherein the second information is used to request the first information.

19. A communication apparatus, comprising:
a transceiver unit, configured to send first information, wherein the first information indicates one or more carrier groups and/or one or more frequency band groups, one carrier group comprises one or more carriers, and one frequency band group comprises one or more frequency bands, wherein
the transceiver unit is further configured to receive configuration information, wherein the configuration information is determined based on the first information, and the configuration information indicates to shut down a frequency band comprised in at least one of the one or more frequency band groups, or the configuration information indicates to shut down a carrier comprised in at least one of the one or more carrier groups; and
a processing unit, configured to: based on the configuration information, shut down the frequency band comprised in the at least one of the one or more frequency band groups, or shut down the carrier comprised in the at least one of the one or more carrier groups.

20. The apparatus according to claim 19, wherein the first information comprises an identifier of the carrier comprised in the one or more carrier groups, and/or the first information comprises an identifier of the frequency band comprised in the one or more frequency band groups.

21. The apparatus according to claim 19 or 20, wherein shutting down the frequency band comprised in the at least one of the one or more frequency band groups comprises:
deleting one or more carriers on the frequency band comprised in the at least one frequency band group;
deactivating one or more carriers on the frequency band comprised in the at least one frequency band group;
blocking one or more carriers on the frequency band comprised in the at least one frequency band group;
disabling the frequency band comprised in the at least one frequency band group; or
entering a radio frequency sleep state.

22. The apparatus according to any one of claims 19 to 21, wherein the first information further comprises a priority corresponding to the one or more frequency band groups, and/or the first information further comprises a priority corresponding to the one or more carrier groups, wherein each priority represents an energy saving priority and is used to determine the configuration information.

23. The apparatus according to claim 22, wherein a higher priority represents a higher energy saving priority, and that the configuration information indicates to shut down the frequency band comprised in the at least one of the one or more frequency band groups, or the configuration information indicates to shut down the carrier comprised in the at least one of the one or more carrier groups comprises:
the configuration information indicates to shut down a frequency band comprised in K1 frequency band groups with higher priorities among the one or more frequency band groups, or the configuration information indicates to shut down a carrier comprised in K2 carrier groups with higher priorities among the one or more carrier groups, wherein
K1 and K2 are integers greater than or equal to 1.

24. The apparatus according to any one of claims 19 to 23, wherein the transceiver unit is further configured to:
receive second information, wherein the second information is used to request the first information.

25. A computer-readable storage medium, wherein the computer-readable storage medium stores computer-executable instructions, and when the computer-executable instructions are invoked by an electronic apparatus, the electronic apparatus is caused to perform the method according to any one of claims 1 to 6, or the electronic apparatus is caused to perform the method according to any one of claims 7 to 12.

26. A communication system, comprising an apparatus configured to perform the method according to any one of claims 1 to 6 and an apparatus configured to perform the method according to any one of claims 7 to 12.

27. A chip system, wherein the chip system comprises:
a communication interface; and
a processor, configured to invoke a instructions through the communication interface and run the instructions, so that a device installed with the chip system performs the method according to any one of claims 1 to 6, or a device installed with the chip system performs the method according to any one of claims 7 to 12.
